# EUROPÄISCHE PATENTSCHRIFT

(11) **EP 1 595 916 B1**
(45) Veröffentlichungstag und Bekanntmachung des Hinweises auf die Patenterteilung: **14.02.2007**
(21) Anmeldenummer: 05010097.3
(22) Anmeldetag: 10.05.2005
(51) Int. Cl.: C08L 51/00, C08L 25/00, C08L 31/00, C08L 33/00

(54) **Pfropfpolymerisathaltige Massen für die Extrusionsverarbeitung**
components comprising grafted polymers for use in extrusion
compositions contenants des polymères greffés pour utilisation en extrusion

(30) Priorität: 15.05.2004 DE 102004024272
(43) Veröffentlichungstag der Anmeldung: 16.11.2005
(73) Patentinhaber: LANXESS Deutschland GmbH, 51369 Leverkusen (DE)
(72) Erfinder: Staratschek, Harry, 51377 Leverkusen (DE); Eichenauer, Herbert, Dr., 41539 Dormagen (DE); Leitz, Edgar, Dr., 41541 Dormagen (DE)

(56) Entgegenhaltungen:
- EP-A- 0 869 147
- EP-A- 1 001 452
- GB-A- 1 573 697
- US-A- 4 408 781

## Beschreibung

Die vorliegende Erfindung betrifft pfropfpolymerisathaltige Formmassen, die sich durch eine sehr gute Verarbeitbarkeit durch Extrusion ohne das Auftreten bestimmter Oberflächendefekte auszeichnen.

Als technische Kunststoffe werden Kunststoffe auf Basis von Pfropfpolymerisaten, insbesondere solchen vom ABS-Typ, seit vielen Jahren zur Herstellung von Formteilen aller Art eingesetzt (siehe z.B. Ullmann's Encyclopedia of Industrial Chemistry, 5th Edition, Vol. A 21, Seiten 652-653, VCH, Weinheim, 1992), wobei insbesondere die Verarbeitung durch Spritzgießen oder Extrudieren angewandt wird.

Je nach Verarbeitungsart haben die eingesetzten Formmassen dabei unterschiedliche Anforderungen zu erfüllen; so dürfen z.B. pfropfpolymerisathaltige Formmassen für die Spritzgieß-Verarbeitung zu keinen Werkzeugbelägen führen (vgl. hierzu z.B. die in EP 869 147 beschriebene Lösung für dieses Problem), während bei pfropfpolymerisathaltigen Formmassen für die Extrusionsverarbeitung Beläge der Walzen vermieden werden müssen.

Ein spezielles Problem bei der Extrusionsverarbeitung stellt die Ausbildung von Oberflächendefekten in Form runder oder länglicher Fehlstellen mit Durchmessern von ca. 0,5 bis 20 mm auf extrudierten Platten, Profilen oder blasgeformten oder tiefgezogenen Teilen dar.

Es wurde nun überraschend gefunden, dass durch Einsatz spezieller Additivmischungen pfropfpolymerisathaltige_Formmassen mit sehr guter Verarbeitbarkeit durch Extrusion ohne das Auftreten dieser Oberflächendefekte zugänglich sind.

Gegenstand der Erfindung sind Formmassen für die Extrusionsverarbeitung enthaltend
A) 5 bis 95 Gew.-%, bevorzugt 10 bis 90 Gew.-% und besonders bevorzugt 20 bis 75 Gew.-% mindestens ein thermoplastisches Homo-, Co- oder Terpolymerisat von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus,
B) 95 bis 5 Gew.-% (bezogen auf A+B), bevorzugt 90 bis 10 Gew.-% und besonders bevorzugt 80 bis 25 Gew.-% mindestens ein Pfropfpolymerisat von
   B.1) 5 bis 90 Gew.-Teilen, vorzugsweise 20 bis 80 Gew.-Teilen und besonders bevorzugt 25 bis 60 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus auf
   B.2) 95 bis 10 Gew.-Teile, vorzugsweise 80 bis 20 Gew.-Teile und besonders bevorzugt 75 bis 40 Gew.-Teile mindestens eines Kautschuks mit einer Glastemperatur ≤ 10°C,
   sowie
C) 0,05 bis 5 Gew.-Teile, vorzugsweise 0,1 bis 3 Gew.-Teile und besonders bevorzugt 0,2 bis 2 Gew.-Teile (jeweils pro 100 Gew.-Teile A+B) mindestens eines teiloxidierten Polyolefins und
D) 0,05 bis 2 Gew.-Teile, vorzugsweise 0,08 bis 1,5 Gew.-Teile und besonders bevorzugt 0,1 bis 1 Gew.-Teile (jeweils pro 100 Gew.-Teile A+B) mindestens eines Erdalkalimetalloxids ausgewählt aus Magnesiumoxid und Calciumoxid.

Erfindungsgemäß geeignete thermoplastische Polymerisate A) sind solche von Styrol,

α-Methylstyrol, p-Methylstyrol, Vinyltoluol, Halogenstyrol, Methylacrylat, Methylmethacrylat, Acrylnitril, Maleinsäureanhydrid, N-substituiertem Maleinimid oder Mischungen daraus.

Die Polymerisate A) sind harzartig, thermoplastisch und kautschukfrei. Besonders bevorzugte Polymerisate A sind solche aus Styrol, Methylmethacrylat, Styrol/Acrylnitril-Gemischen, Styrol/-Acrylnitril/Methylmethacrylat-Gemischen, Styrol/Methylmethacrylat-Gemischen, Acrylnitril/-Methylmethacrylat-Gemischen, α-Methylstyrol/Acrylnitrilgemischen, Styrol/α-Methylstyrol/-Acrylnitril-Gemischen, α-Methylstyrol/Methyl-methacrylat/Acrylnitril-Gemischen, Styrol/α-Methylstyrol/Methylmethacrylat-Gemischen, Styrol/α-Methylstyrol/Methylmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen.

Die Polymerisate A) sind bekannt und lassen sich durch radikalische Polymerisation, insbesondere durch Emulsions-, Suspensions-, Lösungs- oder Massepolymerisation herstellen. Sie besitzen vorzugsweise mittlere Molekulargewichte M_{w} von 20 000 bis 200 000 bzw. Grenzviskositäten [η] von 20 bis 110 ml/g (gemessen in Dimethylformamid bei 25°C).

Zur Herstellung der Pfropfpolymerisate B) geeignete Pfropfmonomere B.1) sind die gleichen wie die für die Polymerisate A) beschriebenen.

Zur Herstellung der Pfropfpolymerisate B) geeignete Kautschuke B.2) sind insbesondere Polybutadien, Butadien/Styrol-Copolymerisate, Butadien/Acrylnitril-Copolymerisate, Polyisopren oder Alkylacrylatkautschuke auf der Basis von C₁-C₈-Alkylacrylaten, insbesondere Ethyl-, Butyl-, Ethylhexylacrylat.

Die Acrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Acrylatkautschuke können auch kleinere Mengen, vorzugsweise bis zu 5 Gew.-% (bezogen auf Kautschukgewicht) vernetzend wirkender ethylenisch ungesättigter Monomerer einpolymerisiert enthalten. Vernetzer sind z.B. Alkylendioldiacrylate und -methacrylate, Polyesterdiacrylate und -methacrylate, Divinylbenzol, Trivinylbenzol, Triallylcyanurat, Allylacrylat und -methacrylat, Butadien oder Isopren. Pfropfgrundlagen können auch Acrylatkautschuke mit Kern/Schalen-Struktur sein mit einem Kern aus vernetztem Dien-Kautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einem nichtkonjugierten Dien wie z.B. Dicyclopentadien), EPM-Kautschuke (Ethylen/Propylen-Kautschuke) und Silikonkautschuke, die gegebenenfalls ebenfalls eine Kern/Schalen-Struktur aufweisen können.

Bevorzugte Kautschuke B.2) zur Herstellung der Pfropfpolymerisate B) sind Dien- und Alkylacrylatkautschuke sowie EPDM-Kautschuke.

Die Kautschuke B.2) liegen in Form wenigstens partiell vernetzter Teilchen mit einem mittleren Teilchendurchmessers (d₅₀) von 0,05 bis 20 µm, bevorzugt von 0,1 bis 2 µm und besonders bevorzugt 0,1 bis 0,8 µm vor.

Der mittlere Teilchendurchmesser d₅₀ wird ermittelt durch Ultrazentrifugenmessungen nach W. Scholtan et al., Kolloid-Z. u. Z. Polymere 250 (1972), 782-796 oder durch Auswertung elektronenmikroskopischer Aufnahmen.

Die Polymerisate B) können durch radikalische Pfropfpolymerisation der Monomeren B.1) in Gegenwart der zu bepfropfenden Kautschuke B.2) hergestellt werden.

Bevorzugte Herstellungsverfahren für die Pfropfpolymerisate B) sind Emulsions-, Lösungs-, Masse-, oder Suspensionspolymerisation und an sich bekannte Kombinationen aus diesen Verfahren. Besonders bevorzugte Pfropfpolymerisate B) sind ABS-Polymerisate.

Ganz besonders bevorzugte Pfropfpolymerisate B) sind Produkte, die durch radikalische Polymerisation von Mischungen aus Styrol und Acrylnitril, vorzugsweise im Gewichtsverhältnis 10:1 bis 1:1, besonders bevorzugt im Gewichtsverhältnis 5:1 bis 2:1, in Gegenwart eines aus überwiegend Dienmonomeren, vorzugsweise Polybutadien, das bis zu 30 Gew.-% Styrol und/oder Acrylnitril als Comonomere enthalten kann, aufgebauten Kautschuks mit einem mittleren Teilchendurchmesser (d₅₀) von 100 bis 450 nm, ganz besonders bevorzugt in Gegenwart zweier aus überwiegend Dienmonomeren, vorzugsweise jeweils Polybutadien, das bis zu 30 Gew.-% Styrol und/oder Acrylnitril als Comonomere enthalten kann, aufgebauter Kautschuke B.2.a) und B.2.b) mit einem mittleren Teilchendurchmesser (d₅₀) von 150 bis 300 nm respektive einem mittleren Teilchendurchmesser (d₅₀) von 350 bis 450 nm im Gewichtsverhältnis B.2.a) : B.2.b) von 10:90 bis 90:10, vorzugsweise 30:70 bis 60:40, erhalten wurden.

Der Kautschukgehalt der Pfropfpolymerisate B) beträgt vorzugsweise 40 bis 95 Gew.-%, besonders bevorzugt 50 bis 90 Gew.-% und ganz besonders bevorzugt 55 bis 85 Gew.-%.

Erfindungsgemäß geeignete teiloxidierte Polyolefine C) sind beispielsweise teiloxidiertes Polyethylen und teiloxidiertes Polypropylen bzw. teiloxidiertes Polyethylen-Wachs und teiloxidiertes Polypropylen-Wachs. Derartige Verbindungen sind bekannt und z.B. beschrieben von A. Thalhofer in Kunststoff-Handbuch Band IV (Polyolefine), S. 161-165 (Carl Hanser Verlag, München 1969). Im Handel befinden sich derartige Verbindungen oft auch unter den Bezeichnungen polare Polyolefin-Wachse bzw. polares Polyethylen-Wachs bzw. polares Polypropylen-Wachs.

Als Komponente D) werden Magnesiumoxid oder Calciumoxid oder Mischungen hieraus eingesetzt.

Zusätzlich zu dem erfindungsgemäßen Additivgemisch C) + D) können die erfindungsgemäßen ABS-Massen im Prinzip weitere die Verarbeitbarkeit verbessernde Additivkomponenten enthalten.

Beispiele für derartige Verbindungen sind z.B. langkettige Carbonsäureamid-Verbindungen wie Ethylendiaminbisstearylamid, Erucasäureamid, Ölsäureamid, Stearinsäureamid, Behensäureamid, Montansäureamid, langkettige Carbonsäureester-Verbindungen wie Glycerintristearat, Glycerintrioleat, Glycerintribehenat, Glycerintrimontanat, Stearylstearat, Stearyloleat, Stearylbehenat, Stearylmontanat, Oleylstearat, Oleyloleat, Oleylbehenat, Oleylmontanat, Behenylstearat, Behenyloleat, Behenylbehenat, Behenylmontanat, Octylstearat, Isooctylstearat, Dodecylstearat, Dodecyloleat, Glycerinmonostearat, Glycerindistearat, Glycerinmonooleat, Glycerindioleat, Pentaerythrittetrastearat, Pentaerythrittetraoleat, Pentaerythrittetrabehenat, Pentaerythrittetramontanat, Pentaerythrittristearat, Pentaerythrittrioleat, Pentaerythrittribehenat, Pentaerythrittrimontanat, Pentaerythritdistearat, Pentaerythritdioleat, Pentaerythritdibehenat, Pentaerythritdimontanat, Pentaerythritmonostearat, Pentaerythritmonooleat, Pentaerythritmonobehenat, Pentaerythritmonomontanat, langkettige Carbonsäuresalz-Verbindungen wie Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciumoleat, Zinkoleat.

Vorzugsweise enthalten die erfindungsgemäßen Formmassen keine der genannten langkettigen Carbonsäure-Derivate.

Ganz besonders bevorzugte erfindungsgemäße Formmassen bestehen aus
A) 85 bis 35 Gew.-% thermoplastischem Copolymerisat aus 5 bis 40 Gew.-Teilen Acrylnitril, und 95 bis 60 Gew.-Teilen Styrol, α-Methylstyrol, Acrylnitril, N-Phenylmaleinimid oder Mischungen daraus,
B) 15 bis 65 Gew.-% Pfropfpolymerisat von 25 bis 60 Gew.-Teilen Styrol, α-Methylstyrol, Acrylnitril, N-Phenylmaleinimid oder Mischungen daraus auf 75 bis 40 Gew.-Teile Polybutadien, das bis zu 30 Gew.-% Styrol und oder Acrylnitril als Comonomere enthalten kann und 0,2 bis 1,5 Gew.-Teilen (pro 100 Gew.-Teilen A+B) einer Kombination aus
C) oxidiertem Polyethylen-Wachs und
D) Magnesiumoxid.

Die erfindungsgemäßen Formmassen, enthaltend A), B), C) und D) und gegebenenfalls übliche Zusatzstoffe wie Verarbeitungsmittel, Stabilisatoren, Pigmente, Antistatika, Füllstoffe werden hergestellt, indem man die jeweiligen Bestandteile in bekannter Weise simultan oder sukzessive bei Zimmertemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörper durch Extrusion hergestellt werden.

Prinzipiell ist es auch möglich, die erfindungsgemäßen Formmassen durch Spritzgießen zu verarbeiten.

Gegenstand der vorliegenden Erfindung ist daher auch ein Verfahren zur Herstellung der Formmassen, deren Verwendung zur Herstellung von Formkörpern sowie die daraus erhältlichen Formkörper.

Die Erfindung wird durch die folgenden Ausführungsbeispiele verdeutlicht.

### Beispiele

### Thermoplastharz A

Statistisches Styrol/Acrylnitril -Copolymerisat (Gew.-Verhältnis 72 : 28) mit einem M_{w} von ca. 115 000, ermittelt durch GPC (Gelpermeationschromatographie).

### Pfropfpolymerisat B-I

Pfropfprodukt erhalten durch Emulsionspolymerisation von 42 Gew.-% eines Styrol/Acrylnitril-Gemisches (Gew.-Verhältnis 73:27) auf 58 Gew.-% einer 1 : 1 -Mischung (Gewichtsverhältnis) zweier teilchenförmiger Polybutadiene mit a) einem mittleren Teilchendurchmesser (d₅₀) von 290 nm und b) einem mittleren Teilchendurchmesser (d₅₀) von 420 nm, Aufarbeitung durch Koagulation des Latex mit einem Magnesiumsulfat/Essigsäure-Gemisch, Waschen mit Wasser und anschließende Trocknung im Vakuum.

### Pfropfpolymerisat B-II

Pfropfprodukt erhalten durch Emulsionspolymerisation von 50 Gew.-% eines Styrol/Acrylnitril-Gemisches (Gew.-Verhältnis 73:27) auf 50 Gew.-% teilchenförmiges Polybutadien mit einem mittleren Teilchendurchmesser (d₅₀) von 130 nm, Aufarbeitung wie unter B-I.

### Additiv C:

Oxidiertes Polyethylen : Licowax PED 191 (Clariant GmbH, Sulzbach, Deutschland)

### Additiv D:

### Magnesiumoxid

Die Einzelkomponenten wurden in den in Tabelle 1 angegebenen Gewichtsanteilen zusammen mit 0,17 Gew.-Teilen eines phenolischen Antioxidans (Irganox® 1076, Ciba), 0,30 Gew.-Teilen eines schwefelhaltigen Synergisten (Irganox® PS 802, Ciba) und 0,15 Gew.-Teilen eines Silikonöls auf einem Extruder compoundiert.

Das resultierende Material wurde anschließend auf einem Breyer BR 60-Extruder mit 6-Zonen-Entgasungsschnecke, Schneckendurchmesser 60 mm, Länge 33D, Schmelzepumpe, Staubalken/Flexlippendüse, Breite 350 mm, Lippenspalt 3 mm, 3-Walzen-kalander und vertikaler Walzenanordnung zu Platten extrudiert. Die Extrudertemperatur betrug 240°C, die Düsentemperatur 240°C und die Abzugsgeschwindigkeit 1,5 m/min, Gesamtextrusionsdauer jeweils 8h.

Dabei wurde beobachtet, ab wann sich Oberflächenstörungen auf den Extrudaten in Form von ca. 0,5 bis 20 mm großen runden oder länglichen Defektstellen ausbilden. Wie aus Tabelle 1 ersichtlich ist, wird nur bei Einsatz der erfindungsgemäßen ABS-Massen eine dauerhafte Extrusionsverarbeitung ohne Oberflächenstörungen auf dem extrudierten Teil erreicht.

**Tabelle 1 : Zusammensetzungen und Eigenschaften**

| **Beispiel** | **A (Gew.-Teile)** | **B-I (Gew.-Teile)** | **B-II (Gew.-Teile)** | **C (Gew.-Teile)** | **D (Gew.-Teile)** | **Auftreten von Oberflächen-Störungen nach x Stunden** |
|---|---|---|---|---|---|---|
| 1 | 55 | 27 | 18 | 0,5 | 0,3 | keine Oberflächenstörungen |
| 2 (Vergleich) | 55 | 27 | 18 | -- | -- | 0,5 h |
| 3 (Vergleich) | 55 | 27 | 18 | 0,5 | -- | 2 h |
| 4 (Vergleich) | 55 | 27 | 18 | -- | 0,3 | 1 h |
| 5 | 65 | 21 | 14 | 0,5 | 0,3 | keine Oberflächenstörungen |
| 6 (Vergleich) | 65 | 21 | 14 | - | -- | 1 h |
| 7 (Vergleich) | 65 | 21 | 14 | 0,5 | -- | 2 h |
| 8 (Vergleich) | 65 | 21 | 14 | -- | 0,3 | 1,5 h |

## Patentansprüche

1. Formmassen enthaltend
A) 5 bis 95 Gew.-% (bezogen auf A+B) mindestens ein thermoplastisches Homo-, Co-oder Terpolymerisat von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus,
B) 95 bis 5 Gew.-% (bezogen auf A+B) mindestens ein Pfropfpolymerisat von
B.1) 5 bis 90 Gew.-Teilen Styrol, α-Methylstyrol, kennsubstituiertem Styrol, Methylmethacrylat, Acrylnitril, Methacrylnitril, Maleinsäureanhydrid, N-substituiertem Maleinimid oder Mischungen daraus auf
B.2) 95 bis 10 Gew.-Teile mindestens eines Kautschuks mit einer Glastemperatur ≤ 10°C in Form wenigstens partiell vernetzter Teilchen mit einem mittleren Teilchendurchmessers (d₅₀) von 0,05 bis 20 µm,
sowie
C) 0,05 bis 5 Gew.-Teile (pro 100 Gew.-Teile A+B) mindestens eines teiloxidierten Polyolefins und
D) 0,05 bis 2 Gew.-Teile (pro 100 Gew.-Teile A+B) mindestens eines Erdalkalimetalloxids ausgewählt aus Magnesiumoxid und Calciumoxid.

2. Formmassen gemäß Anspruch 1 enthaltend
A) 10 bis 90 Gew.-% (bezogen auf A+B) mindestens ein thermoplastischer Homo-, Co- oder Terpolymerisat von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus,
B) 90 bis 10 Gew.-% (bezogen auf A+B) mindestens ein Pfropfpolymerisat von
B.1) 20 bis 80 Gew.-Teilen, Styrol, α-Methylstyrol, kernsubstituiertem Styrol, Methylmethacrylat, Acrylnitril, Methacrylnitril, Maleinsäureanhydrid N-substituiertem Maleinimid oder Mischungen daraus auf
B.2) 80 bis 20 Gew.-Teile, mindestens eines Kautschuks mit einer Glastemperatur ≤ 10°C,
C) 0,1 bis 3 Gew.-Teile (jeweils pro 100 Gew.-Teile A+B) mindestens eines teiloxidierten Polyolefins und
D) 0,08 bis 1,5 Gew.-Teile (jeweils pro 100 Gew.-Teile A+B) mindestens eines Erdalkalimetalloxids ausgewählt aus Magnesiumoxid und Calciumoxid.

3. Formmassen gemäß Ansprüchen 1 oder 2, worin A) ein Copolymerisat aus Styrol und Acrylnitril ist.

4. Formmassen gemäß einem der Ansprüche 1 bis 3, worin B1) ein Gemisch aus Styrol und Acrylnitril ist.

5. Formmassen gemäß einem der Ansprüche 1 bis 4, worin B2) ein aus Polybutadien, das bis zu 30 Gew.-% Styrol und/oder Acrylnitril als Comonomere enthalten kann, aufgebauter Kautschuks mit einem mittleren Teilchendurchmesser (d₅₀) von 100 bis 450 nm ist.

6. Formmassen gemäß einem der Ansprüche 1 bis 4, worin B2) zwei jeweils aus Polybutadien, das bis zu 30 Gew.-% Styrol und/oder Acrylnitril als Comonomere enthalten kann, aufgebaute Kautschuke B.2.a) und B.2.b) mit einem mittleren Teilchendurchmesser (d₅₀) von 150 bis 300 nm respektive einem mittleren Teilchendurchmesser (d₅₀) von 350 bis 450 nm im Gewichtsverhältnis B.2.a) : B.2.b) von 10:90 bis 90:10 enthält.

7. Formmassen gemäß einem der Ansprüche 1 bis 6, worin D) Magnesiumoxid ist.

8. Verwendung von Formmassen gemäß einem der Ansprüche 1 bis 7 zur Herstellung von Platten durch Extrusion.

9. Formkörper erhalten durch Extrusion aus den Formmassen gemäß einem der Ansprüche 1 bis 7.

## Claims

1. Moulding compositions comprising
A) from 5 to 95% by weight (based on A+B) of at least one thermoplastic homo-, co-or terpolymer of styrene, of α-methylstyrene, of ring-substituted styrene, of methyl methacrylate, of acrylonitrile, of methacrylonitrile, of maleic anhydride, of N-substituted maleimide, or of a mixture of these,
B) from 95 to 5% by weight (based on A+B) of at least one graft polymer of
B.1) from 5 to 90 parts by weight of styrene, of α-methylstyrene, of ring-substituted styrene, of methyl methacrylate, of acrylonitrile, of methacrylonitrile, of maleic anhydride, of N-substituted maleimide, or of a mixture of these, onto
B.2) from 95 to 10 parts by weight of at least one rubber with a glass transition temperature ≤ 10°C in the form of at least to some extent crosslinked particles with a median particle diameter (d₅₀) of from 0.05 to 20 µm,
and also
C) from 0.05 to 5 parts by weight (per 100 parts by weight of A+B) of at least one partially oxidized polyolefin and
D) from 0.05 to 2 parts by weight (per 100 parts by weight of A+B) of at least one alkaline earth metal oxide selected from magnesium oxide and calcium oxide.

2. Moulding compositions according to Claim 1 comprising
A) from 10 to 90% by weight (based on A+B) of at least one thermoplastic homo-, co-or terpolymer of styrene, of α-methylstyrene, of ring-substituted styrene, of methyl methacrylate, of acrylonitrile, of methacrylonitrile, of maleic anhydride, of N-substituted maleimide, or of a mixture of these,
B) from 90 to 10% by weight (based on A+B) of at least one graft polymer of
B.1) from 20 to 80 parts by weight of styrene, of α-methylstyrene, of ring-substituted styrene, of methyl methacrylate, of acrylonitrile, of methacrylonitrile, of maleic anhydride, of N-substituted maleimide, or of a mixture of these, onto
B.2) from 80 to 20 parts by weight of at least one rubber with a glass transition temperature ≤ 10°C,
C) from 0.1 to 3 parts by weight (in each case per 100 parts by weight of A+B) of at least one partially oxidized polyolefin and
D) from 0.08 to 1.5 parts by weight (in each case per 100 parts by weight of A+B) of at least one alkaline earth metal oxide selected from magnesium oxide and calcium oxide.

3. Moulding compositions according to Claim 1 or 2, in which A) is a copolymer composed of styrene and acrylonitrile.

4. Moulding compositions according to any of Claims 1 to 3, in which B1) is a mixture composed of styrene and acrylonitrile.

5. Moulding compositions according to any of Claims 1 to 4, in which B2) is a rubber with a median particle diameter (d₅₀) of from 100 to 450 nm, composed of polybutadiene, which may contain up to 30% by weight of styrene and/or acrylonitrile as comonomers.

6. Moulding compositions according to any of Claims 1 to 4, in which B2) comprises two rubbers B.2.a) and B.2.b) with a median particle diameter (d₅₀) of from 150 to 300 nm and, respectively, with a median particle diameter (d₅₀) of from 350 to 450 nm, in a ratio B.2.a): B.2.b) by weight of from 10:90 to 90:10, each composed of polybutadiene which may contain up to 30% by weight of styrene and/or acrylonitrile as comonomers.

7. Moulding compositions according to any of Claims 1 to 6, in which D) is magnesium oxide.

8. Use of moulding compositions according to any of Claims 1 to 7 for production of sheets via extrusion.

9. Moulding obtained via extrusion from the moulding compositions according to any of Claims 1 to 7.

## Revendications

1. Mélanges à mouler contenant
A) 5 à 95 % en poids (par rapport à A+B) d'au moins un homo-, un co- ou un terpolymère thermoplastique de styrène, d'α-méthylstyrène, de styrène substitué sur le noyau, de méthacrylate de méthyle, d'acrylonitrile, de méthacrylonitrile, d'anhydride maléique, de maléimide N-substitué ou de mélanges de ceux-ci,
B) 95 à 5 % en poids (par rapport à A+B) d'au moins un polymère greffé
B.1) de 5 à 90 % en poids de styrène, d'α-méthylstyrène, de styrène substitué sur le noyau, de méthacrylate de méthyle, d'acrylonitrile, de méthacrylonitrile, d'anhydride maléique, de maléimide N-substitué ou de mélanges de ceux-ci, sur
B.2) 95 à 10 % en poids d'au moins un caoutchouc ayant une température de transition vitreuse ≤ 10°C sous forme de particules au moins partiellement réticulées ayant une granulométrie moyenne (d₅₀) de 0,05 à 20 µm,
ainsi que
C) 0,05 à 5 parties en poids (pour 100 parties en poids de A+B) d'au moins une polyoléfine partiellement oxydée, et
D) 0,05 à 2 parties en poids (pour 100 parties en poids de A+B) d'au moins un oxyde d'un métal alcalino-terreux choisi parmi l'oxyde de magnésium et l'oxyde de calcium.

2. Mélanges à mouler selon la revendication 1, contenant
A) 10 à 90 % en poids (par rapport à A+B) d'au moins un homo-, un co- ou un terpolymère thermoplastique de styrène, d'α-méthylstyrène, de styrène substitué sur le noyau, de méthacrylate de méthyle, d'acrylonitrile, de méthacrylonitrile, d'anhydride maléique, de maléimide N-substitué ou de mélanges de ceux-ci,
B) 90 à 10 % en poids (par rapport à A+B) d'au moins un polymère greffé
B.1) de 20 à 80 % en poids de styrène, d'α-méthylstyrène, de styrène substitué sur le noyau, de méthacrylate de méthyle, d'acrylonitrile, de méthacrylonitrile, d'anhydride maléique, de maléimide N-substitué ou de mélanges de ceux-ci, sur
B.2) 80 à 20 % en poids d'au moins un caoutchouc ayant une température de transition vitreuse ≤ 10°C,
C) 0,1 à 3 parties en poids (pour 100 parties en poids de A+B) d'au moins une polyoléfine partiellement oxydée, et
D) 0,08 à 1,5 parties en poids (pour 100 parties en poids de A+B) d'au moins un oxyde d'un métal alcalino-terreux choisi parmi l'oxyde de magnésium et l'oxyde de calcium.

3. Mélanges à mouler selon les revendications 1 ou 2, dans lesquels A) est un copolymère de styrène et d'acrylonitrile.

4. Mélanges à mouler selon l'une des revendications 1 à 3, dans lesquels B1) est un mélange de styrène et d'acrylonitrile.

5. Mélanges à mouler selon l'une des revendications 1 à 4, dans lesquels B2) est un caoutchouc, constitué d'un polybutadiène pouvant contenir jusqu'à 30 % en poids de styrène et/ou d'acrylonitrile en tant que comonomères, ayant une granulométrie moyenne (d₅₀) de 100 à 450 nm.

6. Mélanges à mouler selon l'une des revendications 1 à 4, dans lesquels B2) contient deux caoutchoucs B.2.a) et B.2.b), constitués chacun d'un polybutadiène pouvant contenir jusqu'à 30 % en poids de styrène et/ou d'acrylonitrile en tant que comonomères, ayant respectivement une granulométrie moyenne (d₅₀) de 150 à 300 nm et une granulométrie moyenne (d₅₀) de 350 à 450 nm, selon un rapport en poids B.2.a) :B.2.b) de 10:90 à 90:10.

7. Mélanges à mouler selon l'une des revendications 1 à 6, dans lesquels D) est l'oxyde de magnésium.

8. Utilisation de mélanges à mouler selon l'une des revendications 1 à 7 pour fabriquer des plaques par extrusion.

9. Objet moulé, obtenu par extrusion à partir des mélanges à mouler selon l'une des revendications 1 à 7.
